# EUROPÄISCHE PATENTSCHRIFT

(11) **EP 1 119 087 B1**
(45) Veröffentlichungstag und Bekanntmachung des Hinweises auf die Patenterteilung: **12.03.2003**
(21) Anmeldenummer: 00127014.9
(22) Anmeldetag: 09.12.2000
(51) Int. Cl.: H02G 3/12

(54) **Geräteeinbaudose für Leitungsführungskanäle**
Flush mounted box for cable conduits
Boîte d'encastrement pour canalisations de câbles

(30) Priorität: 18.01.2000 DE 20000777 U
(43) Veröffentlichungstag der Anmeldung: 25.07.2001
(73) Patentinhaber: Tehalit GmbH & Co. KG, 67716 Heltersberg (DE)
(72) Erfinder: Schneckmann, Horst, 67705 Trippstadt (DE); Kauf, Peter, Dipl.-Ing., 66482 Zweibrücken (DE); Schmitt, Erwin, 67659 Kaiserslautern (DE)
(74) Vertreter: Patentanwälte Möll und Bitterich

(56) Entgegenhaltungen:
- EP-A- 0 222 116
- WO-A-90/09692
- WO-A-96/11518

## Beschreibung

Die Erfindung betrifft frontrastende Geräteeinbaudosen für Leitungsführungskanäle gemäß dem Oberbegriff des Anspruchs 1. Vergleichbare Geräteeinbaudosen sind bekannt aus der EP-B 0 733 276, der DE-U 93 05 750 oder der DE-U 297 22 471.

Die Handhabung der handelsüblichen frontrastenden Geräteeinbaudosen ist für den Elektroinstallateur einigermaßen umständlich. Er muss zunächst die Leitungen in die Dose einführen, dann die Leitungen konfektionieren, mit den Elektro-Installationsgeräten verbinden und schließlich die Elektro-Installationsgeräte in der Einbaudose fixieren. Sind die Geräteeinbaudosen an der Rückwand des Leitungsführungskanals fest montiert, lässt sich das Ganze noch einigermaßen schnell und sicher handhaben. Anders verhält es sich dagegen bei frontrastenden Einbaudosen, die erst nach der endgültigen Kontaktierung und Fixierung der Geräte endgültig positioniert werden können. Entweder muss der Installateur die Geräteeinbaudose zunächst fixieren und dann wieder lösen um sie zu positionieren und endgültig zu fixieren, oder er muss ohne feste Basis arbeiten.

Die in der EP-B 0 733 276 beschriebene Geräteeinbaudose versucht die Arbeit des Elektroinstallateurs dadurch zu erleichtern, dass Teile von Boden, Seitenwand und Stimwand der Geräteeinbaudose als nach unten wegklappbare Einheit ausgebildet sind. Diese Geräteeinbaudose bietet während der Montage eine freie Beweglichkeit der zu konfektionierenden Leitung, insbesondere auch während der Fixierung des kontaktierten Elektrogerätes in der Geräteeinbaudose. Wenn alle Teile korrekt positioniert und fixiert sind, wird das abgeklappte Bodenteil in seine endgültige Position geschwenkt und verrastet, wobei gleichzeitig die Zugentlastung für die Leitungen hergestellt wird. Anschließend wird die Geräteeinbaudose in die Deckelhalteprofile des Kanals eingesetzt und mittels Schrauben unverrückbar fixiert. Allerdings ist diese Montageart noch einigermaßen umständlich, da der Installateur die Montageteile - elektrische Leitung, Installationsgerät, Dosenunterteil und Dosenoberteil - während der Montagearbeiten nicht am Kanal fixieren kann. Das ist unbefriedigend.

Auch aus der EP-A 0 222 116 ist eine Einbaudose für den Einbau von elektrischen Installationsgeräten in Leitungsführungskanäle bekannt. Diese Geräteeinbaudose ist jedoch nicht für den frontrastenden Einbau geeignet.

Bedingt durch die Tatsache, dass Leitungsführungskanäle In unterschiedlichen Höhen und Breiten produziert werden, müssen auch die dazu passenden Geräteeinbaudosen in unterschiedlichen Abmessungen hergestellt, gelagert, bestellt, transportiert und montiert werden. Hinzu kommt, dass bei der Konstruktion der Geräteeinbaudosen auf nationale Vorschriften und Gepflogenheiten geachtet werden muss. Ein Hersteller von Leitungsführungskanälen, der ein komplettes Sortiment anbietet, ist somit gezwungen, eine große Zahl von Geräteeinbaudosen zu produzieren und vorzuhalten. Dies ist ebenfalls unbefriedigend.

Der vorliegenden Erfindung liegt daher die Aufgabe zugrunde, eine Geräteeinbaudose anzugeben, die es erlaubt, die Produktions- und Lagerkosten zu reduzieren und gleichzeitig die Montage zu vereinfachen.

Diese Aufgabe wird gelöst durch eine Geräteeinbaudose mit den Merkmalen des Anspruchs 1.

Die vorliegende Erfindung löst die gestellte Aufgabe dadurch, dass die Haltevorrichtungen für die frontrastende Befestigung der Geräteeinbaudose am Unterteil angeformt sind. Dadurch kann der Installateur das zunächst leere Dosenunterteil am Leitungsführungskanal befestigen und anschließend die diversen Einzelteile daran anbauen.

Es versteht sich, dass auch am Oberteil Haltevorrichtungen vorgesehen sein können.

Vorzugsweise sitzt die Trennebene zwischen Dosenoberteil und -unterteil im Bereich der Kabeleinführungsöffnungen, so dass beim Verrasten von Unterteil und Oberteil alle Zugentlastungen hergestellt werden. Während der Montage der Leitungen und Geräte sind die beiden Dosenteile getrennt, das Dosenunterteil kann jedoch bereits korrekt positioniert und fixiert sein. Die Verbindung zwischen Elektroinstallationsgerät und Dosenoberteil wird bequem außerhalb des Leitungsführungskanals hergestellt, und zwar noch bevor die elektrischen Leitungen angeschlossen sind. Nach dem Anschließen der Leitungen muss das mit dem Elektroinstallationsgerät bestückte Dosenoberteil nur noch auf das im Leitungsführungskanal bereits positionierte und fixierte Dosenunterteil aufgerastet werden und die Montage ist fertig.

Ein weiterer Vorteil der vorliegenden Erfindung ist dadurch begründet, dass es möglich ist, bevorzugt das Dosenunterteil immer gleich auszuführen und nur noch das Dosenoberteil an die jeweiligen Gerätetypen anzupassen. Dadurch lassen sich die Dosenunterteile in großen Stückzahlen preiswert herstellen.

Eine besonders schnelle Montage des Elektro-Einbaugerätes an der Geräteeinbaudose lässt sich dann erreichen, wenn gemäß einer Weiterbildung der Erfindung die Einrichtungen zum Befestigen des Einbaugerätes aus Rasthaken bestehen, die an der Unterseite des Frontrahmens angeformt sind. Eine solche Rastmontage ist sehr schnell. Je nach Ausbildung der Rastverbindung lassen sich auch große Kräfte übertragen, z. B. bei Steckdosen.

Gemäß einer Weiterbildung hierzu besitzen die Rasthaken Haltenuten, die mit Haltekonsolen am Elektro-Installationsgerät kooperieren.

Anhand der Zeichnung soll die Erfindung in Form von Ausführungsbeispielen näher erläutert werden. Es zeigen jeweils in Schrägansicht
- Fig. 1: ein universelles Unterteil für frontrastende Geräteeinbaudosen,
- Fig. 2: ein erstes Oberteil, passend zu dem Unterteil der Fig. 1,
- Fig. 3: eine Geräteeinbaudose, zusammengesteckt aus dem Oberteil der Fig. 2 und dem Unterteil der Fig. 1,
- Fig. 4: ein zweites Oberteil, passend zu dem Unterteil der Fig. 1,
- Fig. 5: eine Geräteeinbaudose, zusammengesteckt aus dem Oberteil der Fig. 4 und dem Unterteil der Fig. 1,
- Fig. 6: ein drittes Oberteil, passend zu einem Unterteil mit rechteckigem Querschnitt, und
- Fig. 7: das Oberteil der Fig. 6 mit montiertem Elektro-Einbaugerät.

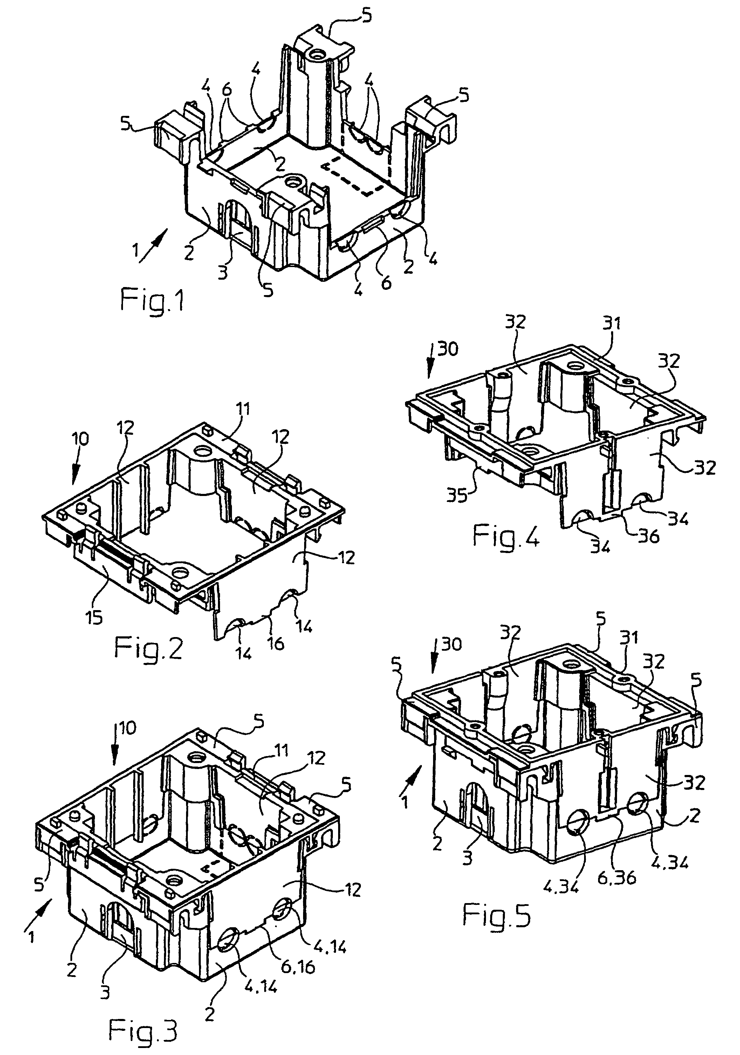

Fig. 1 zeigt ein universelles Unterteil 1 einer frontrastenden zweiteiligen Geräteeinbaudose. Um einen Boden sind vier Seitenwände 2 vorgesehen, die sich nur über einen Teil der Höhe erstrecken. Hakenförmige Haltevorrichtungen 5 ermöglichen die frontrastende Befestigung des Dosenunterteils 1 an den entsprechenden Halteprofilen eines Leitungsführungskanals (nicht dargestellt).

Falls das Unterteil 1 beispielsweise an der Kanalrückwand befestigt werden soll, wird das Unterteil 1 mit einer der im Stand der Technik bekannten, passenden Befestigungsvorrichtungen ausgerüstet.

An den oberen Enden der Teil-Seitenwände 2 erkennt man vorbereitete Kabeleinführungsöffnungen 4. Eine weitere vorbereitete Kabeleinführungsöffnung 3 ist in der vorderen Seitenwand 2 erkennbar.

Fig. 2 zeigt ein erstes Oberteil 10, passend zu dem Unterteil 1 der Fig. 1. Man erkennt Seitenwände 12, die mit den Seitenwänden 2 des Unterteils 1 fluchten, und vorbereitete Kabeleinführungsöffnungen 14, passend zu den Kabeleinführungsöffnungen 4 im Unterteil 1. Das Oberteil 10 ist ebenfalls mit frontrastenden Haltevorrichtungen 15 ausgerüstet. Die Befestigung der Einbaugeräte (nicht dargestellt) erfolgt im Bereich der Front 11.

Fig. 3 zeigt eine durch Zusammenstecken des Unterteils 1 und des Oberteils 10 komplettierte Geräteeinbaudose. Die beiden Teile 1, 10 sind mit Hilfe von korrespondierenden Rastvorrichtungen 6, 16 miteinander verbunden. Die Kabeleinführungsöffnungen 4, 14 sind komplettiert und können als Zugentlastung dienen.

Fig. 4 zeigt ein zweites Oberteil 30. Dieses ist vergleichbar dem Oberteil 10 und besitzt Seitenwände 32, Kabeleinführungsöffnungen 34, Rastvorrichtungen 36 und frontrastende Haltevorrichtungen 35 sowie eine Montagefläche 31. Es unterscheidet sich jedoch in den Abmessungen vom Oberteil 10 der Fig. 2 und besitzt auch Montagemöglichkeiten für andere Elektro-lnstallationsgeräte (nicht dargestellt).

Fig. 5 zeigt die aus einem Unterteil 1 gemäß Fig. 1 und einem Oberteil 30 gemäß Fig. 4 komplettierte zweite Geräteeinbaudose.

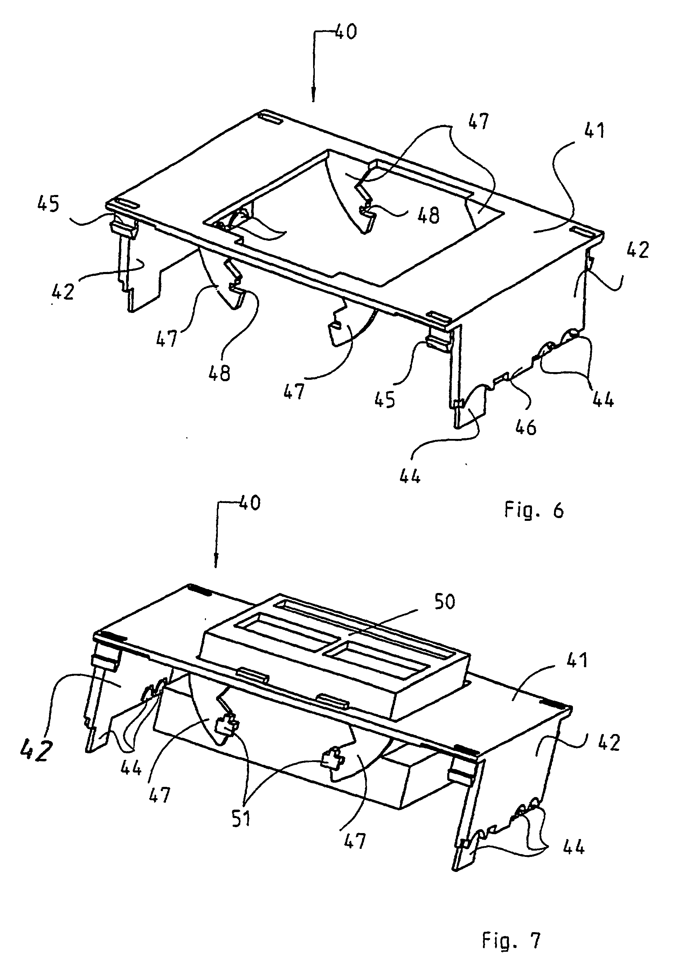

Fig. 6 zeigt ein drittes Oberteil 40, passend zu einem Unterteil (nicht dargestellt) mit rechteckigem Querschnitt. An der Unterseite des Frontrahmens 41 sind Teil-Seitenwände 42 mit Kabeleinführungsöffnungen 44 und Rastvorrichtungen 46 und zusätzlich vier Rasthaken 47 angeformt. Diese sind mit Rastnuten 48 versehen.

Fig. 7 zeigt das Oberteil 40 mit montiertem Elektro-Einbaugerät 50. Dieses besitzt an seinen beiden Seiten Haltekonsolen 51, die in die korrespondierenden Haltenuten 48 an den Rasthaken 47 eingerastet sind. Auf diese Weise sitzt das Gerät 50 stabil im Oberteil 40.

## Patentansprüche

1. Geräteeinbaudose für Leitungsführungskanäle, im wesentlichen umfassend
- ein oben offenes Gehäuse (1, 10; 1, 30; 1, 40) mit
- Boden und Seitenwänden (2, 12, 32, 42),
- einem Frontrahmen (11, 31, 41) mit Einrichtungen zum Befestigen eines Elektro-Einbaugerätes (50),
- Kabeleinführungsöffnungen (3, 4)
- und Haltevorrichtungen (5) zur frontrastenden Befestigung am Kanal,
- das Gehäuse (1, 10; 1, 30; 1, 40) besteht
- aus einem Unterteil (1)
- und einem Oberteil (10, 30, 40),
- Unter- und Oberteil (1, 10, 30, 40) sind lösbar miteinander verrastet, **gekennzeichnet durch** die Merkmale:
- die Haltevorrichtungen (5) sind
- am Unterteil (1)angeformt
- und für eine frontrastende Befestigung am Kanal bestimmt.

2. Geräteeinbaudose nach Anspruch 1, **gekennzeichnet durch** das Merkmal:
- die Trennung zwischen Unter- und Oberteil (1, 10, 30, 40) verläuft wenigstens teilweise **durch** die Kabeleinführungsöffnungen (4, 14, 34, 44).

3. Geräteeinbaudose nach Anspruch 1 oder 2, **gekennzeichnet durch** die Merkmale:
- das Unterteil (1) ist stets das gleiche,
- die Oberteile (10, 30, 40) sind an das jeweilige Einbaugerät (50) angepasst.

4. Geräteeinbaudose nach einem der Ansprüche 1 bis 3, **gekennzeichnet durch** das Merkmal:
- die Einrichtungen zum Befestigen des Elektro-Einbaugerätes (50) bestehen aus Rasthaken (47), die an der Unterseite des Frontrahmens (41) angeformt sind.

5. Geräteeinbaudose nach Anspruch 4, **gekennzeichnet durch** das Merkmal:
- die Rasthaken (47) besitzen Haltenuten (48), die mit Haltekonsolen (51) am Elektro-Installationsgerät (50) kooperieren.

6. Geräteeinbaudose nach einem der Ansprüche 1 bis 5, **gekennzeichnet durch** das Merkmal:
- Haltevorrichtungen (15, 35) sind auch am Oberteil (10, 30) angeformt.

## Claims

1. Built-in appliance box for wiring trunking, essentially comprising
- a housing (1, 10; 1, 30; 1, 40), which is open at the top, with
- a bottom and side walls (2, 12, 32, 42),
- a front frame (11, 31, 41) with devices for attaching an electrical built-in appliance (50),
- cable inlet openings (3, 4)
- and retaining devices (5) for front-locking attachment to the trunking,
- the housing (1, 10; 1, 30; 1, 40) consists
- of a lower part (1)
- and an upper part (10, 30, 40),
- the lower and the upper part (1, 10, 30, 40) are locked together in a releasable fashion,
**characterised by** the features:
- the retaining devices (5) are
- moulded onto the lower part (1)
- and intended for front-locking attachment to the trunking.

2. Built-in appliance box according to Claim 1,
**characterised by** the feature:
- the division between the lower and the upper part (1, 10, 30, 40) extends at least partly through the cable inlet openings (4, 14, 34, 44).

3. Built-in appliance box according to Claim 1 or 2,
**characterised by** the features:
- the lower part is always the same,
- the upper parts (10, 30, 40) are adapted to the respective built-in appliance (50).

4. Built-in appliance box according to any one of Claims 1 to 3, **characterised by** the feature:
- the devices for attaching the electrical built-in appliance (50) consist of locking hooks (47) which are moulded onto the underside of the front frame (41).

5. Built-in appliance box according to Claim 4,
**characterised by** the feature:
- the locking hooks (47) have retaining grooves (48) which co-operate with retaining brackets (51) at the electrical built-in appliance (50).

6. Built-in appliance box according to any one of Claims 1 to 5, **characterised by** the feature:
- retaining devices (15, 35) are also moulded onto the upper part (10, 30).

## Revendications

1. Boîte d'encastrement pour canalisations de câbles, comprenant essentiellement
- un boîtier ouvert sur le haut (1, 10 ; 1, 30 ; 1, 40) avec
- un fond et des parois latérales (2, 12, 32, 42)
- un cadre frontal (11, 31, 41) muni d'agencements pour la fixation d'un appareil électrique encastrable (50),
- des ouvertures pour câbles (3, 4)
- et des dispositifs de retenue (5) pour une fixation par encliquetage frontal à la canalisation,
- le boîtier (1, 10 ; 1, 30 ; 1, 40) se composant
- d'une partie inférieure (1)
- et d'une partie supérieure (10, 30, 40),
- les parties inférieure et supérieure (1, 10, 30, 40) étant encliquetées l'une avec l'autre de manière amovible,
**caractérisée en ce que**
- les dispositifs de retenue (5)
- sont formés sur la partie inférieure (1)
- et prévus pour une fixation par encliquetage frontal sur la canalisation.

2. Boîte d'encastrement selon la revendication 1, **caractérisée en ce que** la séparation entre les parties inférieure et supérieure (1, 10, 30, 40) s'étend au moins partiellement sur les ouvertures pour câbles (4, 14, 34, 44).

3. Boîte d'encastrement selon la revendication 1 ou 2, **caractérisée en ce que** la partie inférieure (1) est toujours la même, et **en ce que** les parties supérieures (10, 30, 40) sont adaptées à chaque appareil encastrable (50).

4. Boîte d'encastrement selon l'une des revendications 1 à 3, **caractérisée en ce que** les agencements pour la fixation de l'appareil électrique encastrable (50) se composent de crochets d'encliquetage (47) qui sont formés sur le côté inférieur du cadre frontal (41).

5. Boîte d'encastrement selon la revendication 4, **caractérisée en ce que** les crochets d'encliquetage (47) possèdent des rainures de retenue (48) qui coopèrent avec des consoles de retenue (51) sur l'appareil d'installation électrique (50).

6. Boîte d'encastrement selon l'une des revendications 1 à 5, **caractérisée en ce que** les dispositifs de retenue (15, 35) sont également formés sur la partie supérieure (10, 30).
